# EUROPÄISCHE PATENTANMELDUNG

(11) **EP 4 282 831 A1**
(43) Veröffentlichungstag der Anmeldung: **29.11.2023**
(21) Anmeldenummer: 23173379.1
(22) Anmeldetag: 15.05.2023
(51) Int. Cl.: C02F 1/72, C02F 1/32, C02F 101/30

(54) **WASSERAUFBEREITUNGSANLAGE ZUM ZERSTÖREN VON ORGANISCHEN SCHADSTOFFEN IM WASSER**

(30) Priorität: 24.05.2022 DE 102022113128
(71) Anmelder: Zahnen Technik GmbH, 54687 Arzfeld (DE)
(72) Erfinder: Zahnen, Herbert, 54687 Arzfeld (DE); Ney, Benedikt, 54687 Arzfeld (DE); Schoden, Niklas, 54617 Lützkampen (DE); Hennigs, Jan, 54675 Mettendorf (DE)
(74) Vertreter: Weidner Stern Jeschke

(57) **Zusammenfassung**

Die Erfindung betrifft eine Wasseraufbereitungsanlage zum Zerstören von organischen Schadstoffen im Wasser, wobei die Wasseraufbereitungsanlage mindestens ein Reaktormodul aufweist und das mindestens eine Reaktormodul ein erstes Katalysatorgehäuse mit einem in einer Längsrichtung durchgehenden Hohlraum und mit einer Durchströmungsrichtung in der Längsrichtung und mindestens eine UV-Strahlungsquelle aufweist, wobei in dem Hohlraum mindestens ein Katalysatorelement mit einem Trägermaterial und einem Katalysatormaterial angeordnet ist und mittels der mindestens einen UV-Strahlungsquelle das mindestens eine Katalysatorelement in dem Katalysatorgehäuse bestrahlbar ist, und das mindestens eine Katalysatorelement ein poröses, vom Wasser durchströmbares Trägermaterial aufweist und eine Querschnittsfläche des mindestens einen Katalysatorelementes quer zu der Längsrichtung im Wesentlichen vollständig den Hohlraum des Katalysatorgehäuses ausfüllt, sodass bei einem Bestrahlen mit UV-Licht mittels der mindestens einen UV-Strahlungsquelle und bei einem Durchströmen des Katalysatorelementes mit Wasser organische Schadstoffe in dem Wasser photokatalytisch abbaubar sind. Des Weiteren betrifft die Erfindung die Verwendung einer Wasseraufbereitungsanlage zum Zerstören von organischen Schadstoffen im Wasser.

## Beschreibung

Die Erfindung betrifft eine Wasseraufbereitungsanlage zum Zerstören von organischen Schadstoffen im Wasser, wobei die Wasseraufbereitungsanlage einen Zulauf zum Zuführen von mit organischen Schadstoffen belastetem Wasser, einen Ablauf zum Abführen des gereinigten Wassers und mindestens ein Reaktormodul aufweist, und der Wasseraufbereitungsanlage eine Fördereinheit zum Fördern des belasteten und/oder gereinigten Wassers zugeordnet ist oder die Wasseraufbereitungsanlage eine Fördereinheit zum Fördern des belasteten und/oder gereinigten Wassers aufweist, wobei das mindestens eine Reaktormodul ein erstes Katalysatorgehäuse mit einem in einer Längsrichtung durchgehenden Hohlraum und mit einer Durchströmungsrichtung in der Längsrichtung und mindestens eine UV-Strahlungsquelle aufweist, und das erste Katalysatorgehäuse ein UV-durchlässiges Material aufweist, wobei in dem Hohlraum mindestens ein Katalysatorelement mit einem Trägermaterial und einem Katalysatormaterial angeordnet ist und mittels der mindestens einen UV-Strahlungsquelle das Wasser in dem Katalysatorgehäuse bestrahlbar ist.

Organische Schadstoffe, wie Medikamenten- und/oder Pestizidrückstände und Haushalts- und Industriechemikalien gelangen über verschiedene Eintragspfade in das kommunale Abwasser. Zudem fallen mit organischen Schadstoffen belastete Wässer in Gewerbe und Industrie an, wie beispielsweise beim Reinigen von Anlagen zur Herstellung und/oder bei der Verwendung von organischen Chemikalien. Organisch hochbelastete Wässer treten auch in landwirtschaftlichen Betrieben beim Waschen und Restentleeren von Spritzenwagen auf.

Zur Entfernung von organischen Schadstoffen aus Wässern stehen prinzipiell vier grundlegende Verfahren zur Verfügung. Bei physikalischen Verfahren sind prinzipiell eine Membranfiltration über Nanofiltrations- und/oder Umkehrosmosemembranen zur Entfernung geeignet. Aufgrund des notwendigen sehr hohen Wasserdruckes bedingt durch eine sehr kleine Porengröße ist die Membranfiltration sehr energieintensiv und benötigt eine weitgehende, mechanische Vorreinigung. Zudem verbleiben die organischen Stoffe im Retentat in konzentrierter Form und müssen anschließend entsorgt werden.

Organische Stoffe können auch mit adsorptiven Verfahren, wie beispielsweise durch Adsorption an Pulveraktivkohle suspendiert im Wasser oder an granulierter Aktivkohle in Filterbetten, aus dem Wasser entfernt werden. Nachteilig ist, dass die Entfernung aufgrund von Adsorptions- und Desorptionsgleichgewichten nie vollständig erfolgt, Aktivkohle ein Verbrauchsmaterial ist und die beladene Aktivkohle entsorgt oder regeneriert werden muss. Zudem ist der Bedarf an Aktivkohle bei hoher Schadstoffbelastung, wie zum Beispiel bei Spritzenwagenwaschwässern im Weinbau, sehr hoch.

Mittels biologischer Verfahren können schwer abbaubare organische Stoffe prinzipiell nicht vollständig biologisch abgebaut werden und benötigen generell sehr lange Abbauzeiten. Dazu wird beispielsweise in einem Biobeet-Verfahren kontaminiertes Wasser auf bepflanzte oder nicht bepflanzte Beete mit einer Mischung aus Mutterboden, Stroh und Torf zur Behandlung von Spritzenwässern in der Landwirtschaft berieselt. Hierbei werden die organischen Schadstoffe jedoch nur teilweise biologisch abgebaut, sondern reichern sich auch in diesen Substraten der Beete an und/oder werden von den Pflanzen aufgenommen. Nachteilig bei diesen Verfahren ist die geringe Durchsatzleistung, die sehr lange Behandlungszeit, der relativ hohe Platzbedarf, die hohen Kosten für die Erdarbeiten zum Erstellen der Beete sowie die Kontamination des Bio-Beetes. Zudem müssen nach gewissen Standzeiten ein vollständiger Austausch der Substrate und eine spezielle Entsorgung von kontaminierten Erdschichten erfolgen.

Des Weiteren sind oxidative Verfahren bekannt, um organische Schadstoffe unter Zugabe eines starken Oxidationsmittels und/oder Energie zu zerstören. In der Abwasserbehandlung wird hierzu insbesondere Ozon eingesetzt, welches neben einer entsprechenden Sicherheitstechnik auch eine zusätzliche Nachbehandlung zur Ozonzerstörung benötigt. Weitergehende Oxidationsverfahren (sogenannten "Advanced Oxidation Processes" (AOP)), wie die Kombination von Ozon oder Titandioxid als Photokatalysator und UV-Strahlung und/oder Wasserstoffperoxid, Fenton-Reaktion zwischen Metallionen und Wasserstoffperoxid oder Photo-Fenton-Reaktion zwischen Metallionen als Photokatalysator, Wasserstoffperoxid und UV-Strahlung, finden bisher weitgehend keine großtechnische Anwendung. Bei den weitergehenden katalytischen Oxidationsverfahren wird der Katalysator entweder suspendiert als Partikel im Wasser eingesetzt, welches eine optimale Vermischung und ein ständiges Rühren der Suspension erfordert, oder als Schüttgut in einem Katalysatorbett, welches durchströmt wird. Nachteilig hierbei ist, dass in dem Katalysatorbett Toträume und Kurzschlussströmungen auftreten können, sodass ein Anteil des Wassers unbehandelt durch das Katalysatorbett durchtreten kann.

Zudem werden nach dem Stand der Technik in der Wasseraufbereitung häufig getauchte UV-Strahler eingesetzt, welche direkt im Wasser angeordnet sind. Dadurch wird der UV-Strahler zwar direkt durch das vorbeifließende Wasser gekühlt, nachteilig sind jedoch die Verschmutzung der Strahleroberfläche durch Ablagerung und/oder durch Ausfällen von Stoffen enthalten im Wasser.

Alle vorgenannten Verfahren weisen die Nachteile auf, dass diese aufgrund von benötigten Hilfsstoffen, Verbrauchsmaterialien, Sicherheitstechnik, notwendigen lokalen Baumaßnahmen und/oder dem notwendigen Bauraum nicht für eine mobile Wasseraufbereitungsanlage geeignet sind und nicht eine modulare Skalierung der Anlagengröße erlauben.

In der DE 100 57 722 A1 wird eine Vorrichtung zur Reinigung und Desinfektion von wässrigen Medien mit gasförmigen und/oder flüssigen Oxidationsmitteln beschrieben, in welcher ein Behälter einen Metallmantel und ein Quarzrohr mit dazwischen angeordneten, gleichmäßig verteilten UV-C-Strahlern aufweist. In dem Quarzrohr ist ein zylinderförmiger poröser Träger mit einer photoaktiven Katalysatorschicht an seiner Oberfläche angeordnet, welcher zur Vergrößerung der Oberfläche eine schneckenförmige Gestalt aufweist. Das zu behandelnde Medium strömt von unten nach oben durch den sich zwischen dem Quarzrohr und dem zylindrischen Träger ergebenen inneren Reaktionsraum. Das Oxidationsmittel wird außerhalb des Behälters gebildet und über eine mittige Bohrung in den Träger zur Erzeugung von feinen Blasen eingeleitet.

Die DE 195 15 828 A1 offenbart eine integrierte Vorrichtung zur Filtration und Photokatalyse mit einer dünnen porösen, photokatalytischen Keramikmembran auf einer Filtratseite, wobei auf den auf der Filtratseite austretenden feinverteilten Flüssigkeitsfilm eine UV-Strahlung zur weiteren photokatalytischen Zerstörung der im Filtrat vorhandenen Schadstoffe auftrifft.

Aus der DE 10 2011 050 758 A1 ist ein optofluidischer Katalysator-Werkstoff zur Eliminierung von Schadstoffen bekannt, welcher einen retikulierten Kunststoff-Schaum aufweist, bei dem durch Retikulieren die Zwischenwände zwischen den einzelnen Schaum-Zellen teilweise aufgebrochen sind, sodass der Schaum fluiddurchlässig und mit Luft oder Wasser durchströmbar ist. Des Weiteren weist der optofluidischen Katalysator-Werkstoff eine Metall- oder Metalllegierungsschicht auf der Oberfläche des Schaumes und auf dieser Metall- oder Metalllegierungsschicht wiederum ein photokatalytisches Substrat auf.

Aufgabe der Erfindung ist es, den Stand der Technik zu verbessern.

Gelöst wird die Aufgabe durch eine Wasseraufbereitungsanlage zum Zerstören von organischen Schadstoffen im Wasser, wobei die Wasseraufbereitungsanlage einen Zulauf zum Zuführen von mit organischen Schadstoffen belastetem Wasser, einen Ablauf zum Abführen des gereinigten Wassers und mindestens ein Reaktormodul aufweist, und der Wasseraufbereitungsanlage eine Fördereinheit zum Fördern des belasteten und/oder gereinigten Wassers zugeordnet ist oder die Wasseraufbereitungsanlage eine Fördereinheit zum Fördern des belasteten und/oder gereinigten Wassers aufweist, wobei das mindestens eine Reaktormodul ein erstes Katalysatorgehäuse mit einem in einer Längsrichtung durchgehenden Hohlraum und mit einer Durchströmungsrichtung in der Längsrichtung und mindestens eine UV-Strahlungsquelle aufweist, und das erste Katalysatorgehäuse ein UV-durchlässiges Material aufweist, wobei in dem Hohlraum mindestens ein Katalysatorelement mit einem Trägermaterial und einem Katalysatormaterial angeordnet ist und mittels der mindestens einen UV-Strahlungsquelle das mindestens eine Katalysatorelement in dem Katalysatorgehäuse bestrahlbar ist, wobei das mindestens eine Katalysatorelement ein poröses, vom Wasser durchströmbares Trägermaterial aufweist und eine Querschnittsfläche des mindestens einen Katalysatorelementes quer zu der Längsrichtung im Wesentlichen vollständig den Hohlraum des Katalysatorgehäuses ausfüllt, sodass bei einem Bestrahlen mit UV-Licht mittels der mindestens einen UV-Strahlungsquelle und bei einem Durchströmen des Katalysatorelementes mit Wasser organische Schadstoffe in dem Wasser photokatalytisch abbaubar sind.

Somit wird eine Wasseraufbereitungsanlage zur photokatalytischen Zerstörung von organischen Schadstoffen bereitgestellt, bei der Toträume und Kurzschlussströmungen des Wassers vollständig und weitgehend vermieden werden, da das mindestens eine Katalysatorelement selbst aufgrund des porösen Trägermaterials vom Wasser direkt durchströmbar ist und im Wesentlichen den gesamten Querschnitt des Hohlraumes des Katalysatorgehäuses einnimmt. Es ist besonders vorteilhaft, dass die Wasseraufbereitungsanlage neben der mindestens einen UV-Strahlungsquelle keinen weiteren Einsatz von Hilfsstoffen, Verbrauchsmaterialien und/oder Energie zur katalytischen Oxidation der organischen Schadstoffe benötigt. Im Vergleich zu den eingangs nach dem Stand der Technik genannten Verfahren, ist mit der erfindungsgemäßen Wasseraufbereitungsanlage eine schnellere Zerstörung von organischen Schadstoffen, ein geringerer Platzbedarf, eine Behandlung ohne Erzeugung von entsorgungspflichtigem Material und/oder ohne Einsatz von Hilfsstoffen und Verbrauchsmaterial ermöglicht. Folglich ist die Wasseraufbereitungsanlage energieeffizienter, wartungsärmer und/oder kostengünstiger als Anlagen nach den bekannten Verfahren zu betreiben.

Es ist besonders vorteilhaft, dass das mindestens eine Reaktormodul als Kernstück der Wasseraufbereitungsanlage bereits alle Komponenten zur photokatalytischen Zerstörung von organischen Schadstoffen aufweist, wodurch ein dezentraler und/oder mobiler Einsatz der Wasseraufbereitungsanlage ermöglicht ist. Aufgrund der vollständigen Ausnutzung der großen Katalysatoroberfläche aufgrund der porösen Ausgestaltung des mindestens einen Katalysatorelementes und der vollständigen räumlichen Ausnutzung des Hohlraums des Katalysatorgehäuses mittels des Katalysatorelementes weist die Wasseraufbereitungsanlage eine kurze Verweilzeit zur Zerstörung von organischen Schadstoffen auf und ist in einer belastungsabhängigen Fahrweise betreibbar. Durch das vollständige Durchströmen des mindestens einen Katalysatorelementes ist eine weitgehende und/oder vollständige Entfernung von organischen Schadstoffen, wie Pflanzenschutzmitteln, sicherstellbar. Mit der Wasseraufbereitungsanlage ist eine Entfernung von > 90 % der in dem belasteten Wasser enthaltenen organischen Schadstoffe und/oder Pflanzenschutzmittel erreichbar. Zudem entstehen und/oder verbleiben in der Wasseraufbereitungsanlage keine Reststoffe, welche separat entsorgt werden müssen. Da der Ablauf der Wasseraufbereitungsanlage frei oder im Wesentlichen frei von organischen Schadstoffen ist, kann dieser direkt als Brauchwasser ohne weitere Behandlungsschritte weiterverwendet werden. Ebenso kann prinzipiell der behandelte Ablauf aus der Wasseraufbereitungsanlage auch direkt in die öffentliche Kanalisation eingeleitet werden.

Durch die kurze Verweilzeit und somit die geringe Baugröße ist ein mobiler ortsungebundener Einsatz der Wasseraufbereitungsanlage am Entstehungsort des organisch belasteten Wassers ermöglicht und bei der Behandlung von Wasch- und/oder Spülwässern aus Spritzenwagen muss nicht ein Einsatz an wenigen zentralen Waschplätzen der Spritzenwagen mit begrenzter Kapazität erfolgen. Somit stehen eine dezentral einsetzbare, mobile Anlage und ein entsprechend robustes Verfahren zur Verfügung, um belastete Wasch- und Spülwässer von Spritzenwagen auch in größeren Mengen wirtschaftlich und zeitnah zu behandeln. Neben der Installation vor Ort ist nur das Nutzen einer integrierten oder zugeordneten autarken Energieversorgung oder ein Anschluss an eine externe Energiequelle/Netzbetrieb für das mobile und/oder dezentrale Betreiben der Wasseraufbereitungsanlage zu realisieren.

Durch das poröse Trägermaterial, welches als Träger für das immobilisierte Katalysatormaterial dient, wird gleichzeitig eine optimale Porenstruktur zum Durchströmen des mindestens einen Katalysatorelementes mit Wasser und eine hohe reaktive Oberfläche für die photokatalytische Reaktion an dem Katalysatormaterial bereitgestellt, wobei unter UV-Bestrahlung verschiedene reaktive Radikalspezies, wie Sauerstoff-Radikale und OH-Radikale, an der Katalysatoroberfläche entstehen, welche dann mit den organischen Schadstoffen im Wasser reagieren und diese teilweise oder vollständig oxidieren und folglich zerstören.

Ein wesentlicher Gedanke der Erfindung beruht darauf, dass das Katalysatormaterial und/oder das Trägermaterial eben gerade nicht als feine Partikel suspendiert im Wasser oder als grobkörniges Schüttgut in einem Festbett einzusetzen, sondern das Katalysatorelement selbst aufgrund des hochporösen Trägermaterials vollständig in Durchströmungsrichtung durchströmbar auszubilden und dass das Katalysatorelement einstückig, quasi als Block, im Wesentlichen vollständig den Querschnitt des Hohlraums des Katalysatorgehäuses einnimmt, sodass das mindestens eine Katalysatorelement durch seine Querschnittsfläche vollständig in Durchströmungsrichtung durchströmt wird, wodurch eine gleichmäßige An- und Durchströmung des Katalysatorelementes und eine hohe Zerstörungsrate von organischen Schadstoffen in dem Wasser und folglich eine geringe Verweilzeit erzielbar sind.

Folgendes Begriffliche sei erläutert:
Unter einer "Wasseraufbereitungsanlage" wird insbesondere eine Anlage verstanden, welche Komponenten speziell zum Zerstören von organischen Schadstoffen im Wasser aufweist. Dazu weist die Wasseraufbereitungsanlage insbesondere mindestens ein Reaktormodul und/oder einen photokatalytischen Reaktor auf. Optional kann die Wasseraufbereitungsanlage weitere Vorbehandlungs- und/oder Nachbehandlungsschritte und entsprechende Aufbereitungsaggregate aufweisen. Bevorzugt wird die Wasseraufbereitungsanlage jedoch eigenständig beispielsweise als vierte Reinigungsstufe im Ablauf einer Kläranlage nach der ersten Stufe der mechanischen Vorabscheidung, der zweiten Stufe des biologischen Abbaus und der dritten Stufe der weitergehenden, biologischen Entfernungen von Nährstoffen eingesetzt. Ebenso kann die Wasseraufbereitungsanlage dezentral und/oder direkt am Entstehungsort von mit organischen Stoffen belastetem Wasser, beispielsweise in der Industrie oder Landwirtschaft, eingesetzt werden. Die Wasseraufbereitungsanlage ist insbesondere in einem ISO-Container, beispielsweise einem 20-Fuß-Container, angeordnet und somit transportabel. Aufgrund des modularen Aufbaus ist die Wasseraufbereitungsanlage für einem weiten Volumenstrombereich einsetzbar, beispielsweise kann diese für einen Durchsatz von 1000 l/h ausgelegt sein.

Unter "Wasser" wird insbesondere jegliche Art von Wasser in einem flüssigen Aggregatzustand verstanden. Bei Wasser kann es sich insbesondere um Trinkwasser, Abwasser, Spülwasser, Waschwasser und/oder Brauchwasser handeln, welches mit organischen Schadstoffen belastet ist.

"Organische Schadstoffe" sind insbesondere organische Verbindungen, welche ein Gefährdungspotenzial für Menschen, Tiere, Pflanzen und/oder die Umwelt aufweisen und biologisch nur sehr langsam abbaubar und/oder umwandelbar sind. Organische Schadstoffe können sich insbesondere in Organismen anreichern und dort schädliche Effekte bewirken und/oder über weite Strecken in der Umwelt verteilt werden. Unter organischen Schadstoffen werden auch persistente organische Schadstoffe (POP) verstanden. Beispielsweise handelt es sich bei den organischen Schadstoffen um Chemikalien, Pestizidrückstände, Pflanzenschutzmittel, oder Medikamentenrückstände. Unter organischen Schadstoffen werden auch Umwandlungsprodukte und/oder Metaboliten der primär angefallenen organischen Schadstoffe verstanden.

Unter "Zerstören" wird insbesondere verstanden, dass ein organischer Schadstoff oxidativ umgewandelt und/oder abgebaut wird. Das Zerstören und somit die Oxidation des organischen Schadstoffes kann insbesondere teilweise oder vollständig erfolgen. Bei der teilweisen oxidativen Umsetzung des Schadstoffes entstehen Abbauprodukte (Metabolite), welche häufig weniger schädlich und leichter biologisch abbaubar sind. Bei dem vollständigen Zerstören wird der organische Schadstoff vollständig zu Wasser, CO₂ und Sauerstoff umgesetzt. Auch kann die Oxidation des Schadstoffes oder der Schadstoffe nur bis zu einem jeweils vorgegebenen und/oder einzuhaltenden Grenzwert und/oder bis zum Vorliegen von unkritische Metaboliten erfolgen.

Bei einer "Fördereinheit" handelt es sich um ein Aggregat, welches belastetes und/oder gereinigtes Wasser fördert. Bei der Fördereinheit kann es sich beispielsweise um eine externe Druckleitung, um eine nass aufgestellte Zulaufpumpe aus einer Vorlage, beispielsweise einem Zwischenspeicher oder einer bauseits vorhandenen Zisterne, oder um eine integrierte Pumpe handeln. Zudem kann mittels einer integrierten Pumpe und/oder Zirkulationspumpe über einen Vorlagebehälter der Anlage das bereits einmal gereinigte Wasser auch im Kreislauf wieder über das mindestens eine Reaktormodul gefahren werden und somit ein Kreislaufbetrieb ermöglicht sein. Die integrierte Pumpe ist bevorzugt hinter einem Vorlagebehälter angeordnet, welcher das Wasser in und durch das erste Reaktormodul und/oder die weiteren Reaktormodule fördert. Mittels der integrierten Pumpe wird insbesondere eine Fließgeschwindigkeit zwischen 0,3 l/s und 1,2 l/s eingestellt.

Bei einem "Vorlagebehälter" kann es sich um jegliche Art von Behälter handeln. Ein Vorlagebehälter kann insbesondere ein Tank sein. Bei einem Vorlagebehälter handelt es sich insbesondere um einen anlageseitigen Vorlagebehälter und/oder Kreislaufbehälter. Der Vorlagebehälter kann beispielsweise in Form eines Intermediate Bulk Containers (IBC) ausgebildet sein. Der Vorlagebehälter kann insbesondere eine Füllstandsmessung, beispielsweise mittels Radar, zum Erfassen des Füllstandes des Vorlagebehälters aufweisen. Ein Signal der Füllstandsmessung kann insbesondere an eine Steuerungs- und/oder Regelungseinrichtung übertragen und weiterverarbeitet werden. Bei einer batchweisen Fahrweise kann bei Erreichen eines maximalen Füllstands in dem Vorlagebehälter ein Zulaufventil geschlossen und/oder die Zulaufpumpe abgeschaltet und ein steuerbares Ventil anschließend den Rohrstrang zum ersten Reaktormodul öffnen.

Vor dem Vorlagebehälter und/oder dem mindestens ersten Reaktormodul kann die Wasseraufbereitungsanlage einen Vorabscheider aufweisen, um partikuläre Stoffe und/oder Grobstoffe zu entfernen. Bei einem Vorabscheider kann es sich beispielsweise um ein Vorfilter, wie ein Beutelfilter, oder ein automatisches Rückspülfilter, handeln. Ebenso kann es sich alternativ oder ergänzend zu einem Filter bei dem Vorabscheider um einen mechanischen Rechen und/oder um einen Fällungs- und/oder Flockungsreaktor handeln.

Ein "Reaktormodul" ist insbesondere ein modular aufgebauter photokatalytischer Reaktor. Dadurch, dass das Reaktormodul mindestens eine UV-Strahlungsquelle und mindestens ein erstes Katalysatorgehäuse mit einem innenliegenden Katalysatorelement aufweist, ist ein einziges Reaktormodul alleine bereits ein funktionsfähiger photokatalytischer Reaktor. Mehrere fluidtechnisch verschaltete Reaktormodule bilden insbesondere einen Röhrenreaktor, Durchströmungs- und/oder Durchflussreaktor aus.

Bei einem "Katalysatorgehäuse" handelt es sich insbesondere um ein Gehäuse mit einem durchgehenden Hohlraum und somit mit zwei sich gegenüberliegenden offenen Enden. Dadurch ist insbesondere das mindestens eine Katalysatorelement durch eine der beiden offenen Enden und/oder Seiten in Längsrichtung in den Hohlraum des Katalysatorgehäuses einbringbar und auch wieder entfernbar, sodass das mindestens eine Katalysatorelement in dem Katalysatorgehäuse austauschbar ist. Prinzipiell kann das Katalysatorgehäuse jedoch auch vollständig geschlossen sein und beispielsweise in Form eines Hohlzylinders mit geschlossenen Stirnseiten ausgebildet sein, wobei die Gehäusewand nur zur Verbindung mit einem Zulaufrohr und einem Ablaufrohr durchbrochen ist. Dadurch ist jedoch eine leichte Austauschbar des Katalysatorelementes nicht gegeben oder nur unter zerstörerischem Öffnen des geschlossenen Gehäuses möglich. Bevorzugt ist das Katalysatorgehäuse dagegen als länglicher Hohlkörper mit zwei offenen Stirnseiten ausgebildet. Beispielsweise kann es sich bei dem Katalysatorgehäuse um ein Rohr handeln. Prinzipiell muss das Katalysatorgehäuse jedoch nicht zwingend einen kreisrunden Querschnitt aufweisen, sondern kann auch einen ovalen, dreieckigen, rechteckigen, quadratischen, andersartigen mehreckigen oder sonstig geformten Querschnitt aufweisen. Das Katalysatorgehäuse kann insbesondere waagerecht oder senkrecht ausgerichtet sein. Als UV-durchlässiges Material kann das Katalysatorgehäuse beispielsweise Acrylglas und/oder Glas, wie Borsilikatglas, aufweisen. Transparentes Acrylglas für das jeweilige Katalysatorgehäuse bietet den Vorteil der Bruchfestigkeit und weist eine UV-Durchlässigkeit von über 92 % auf.

Unter einer "Längsrichtung" wird insbesondere die Richtung der längsten Abmessung des Katalysatorgehäuses verstanden. Die Längsrichtung fällt insbesondere mit der Durchströmungsrichtung durch den Hohlraum und/oder das Katalysatorelement und/oder die Katalysatorelemente zusammen, wenn der Zulauf in das Katalysatorgehäuse durch die eine offene Stirnseite und der Ablauf auf der gegenüberliegenden zweiten Stirnseite angeordnet sind.

Die jeweils zuführenden und abführenden Rohrleitungen können an den beiden offenen Stirnseiten beispielsweise mittels Gewindeflanschen mit entsprechendem Innengewinde des Flansches und Außengewinde an der Außenoberfläche des Katalysatorgehäuses verbunden sein. Um eine gleichmäßige Anströmung des ersten in dem Hohlraum des Katalysatorgehäuses angeordneten Katalysatorelementes zu erreichen, kann beispielsweise ein Diffuser und/oder eine Verteilungsplatte an und/oder in dem offenen Ende des Katalysatorgehäuses, beispielsweise innenliegend gehalten durch den Verbindungsflansch, angeordnet sein.

Bei dem 'Katalysatorelement" handelt es sich insbesondere um ein einstückiges Element, welches das poröse Trägermaterial mit dem darauf immobilisierten Katalysatormaterial aufweist. Das Katalysatormaterial stellt den eigentlichen Photokatalysator dar und katalysiert die photokatalytische Reaktion. Das Katalysatormaterial wird insbesondere bei der photokatalytischen Oxidation selbst nicht verbraucht. Das Katalysatormaterial ist insbesondere auf, an und/oder in der Oberfläche des porösen Trägermaterials und/oder dessen Poren immobilisiert und/oder aufgebracht.

Bei dem "Katalysatormaterial" kann es sich um jegliches Material handeln, an dessen Oberfläche unter UV-Bestrahlung Radikale wie Sauerstoff- und/oder OH-Radikalen entstehen und somit eine photokatalytische Reaktion und Oxidation katalysieren. Bei dem Katalysatormaterial kann es sich beispielsweise um Titandioxid handeln, wobei unter UV-Bestrahlung an der Oberfläche von Titandioxid Elektron-Loch-Paare und folglich Radikale erzeugt werden. Beispielsweise ist das Titandioxid durch wiederholtes Kalzinieren und Spülen auf die Oberfläche des Trägermaterials aufgebracht. Das Katalysatormaterial weist beispielsweise eine Schichtdicke von < 10 µm, insbesondere < 5 µm, bevorzugt < 1 µm auf. Dadurch, dass das Katalysatormaterial auf dem Trägermaterial immobilisiert ist, liegt zum einen eine gleichmäßige Beladung der Oberfläche des Trägermaterials mit dem Katalysatormaterial vor, zum anderen wird ein Materialaustrag in die Umwelt mit dem aus dem Ablauf der Anlage ausfließenden Wasser verhindert.

Das "Trägermaterial" ist insbesondere ein Material, welches eine hohe offene Porosität aufweist. Aufgrund der offenen Poren wird das Trägermaterial nicht nur vom Wasser umströmt, sondern bevorzugt vollständig durchströmt. Das Trägermaterial weist insbesondere eine offenporige Struktur oder mehrere offenporige Strukturen auf. Dabei kann es sich beispielsweise um 3D-gedruckte Strukturen, ein Gitter und/oder einen Schaum handeln. Die 3D-gedruckten Strukturen können beispielsweise keramisches und/oder metallisches Material, wie Aluminiumoxid, aufweisen. Bei dem Trägermaterial kann es sich auch um einen beschichteten Metallschaum handeln. Auch kann das Trägermaterial einen zellularen Werkstoff aufweisen oder es kann sich um eine Schüttung, beispielsweise aus SiC Ringen, handeln. Beispielsweise handelt es sich bei dem porösen Trägermaterial um einen metallischen und/oder keramischen Schaum. Das Trägermaterial weist insbesondere eine offene Porosität in einem Bereich von 90 % bis 99 %, insbesondere von 92 % bis 97 %, bevorzugt von 93 % bis 96 %, auf. Bei dem Trägermaterial kann es sich beispielsweise um einen offenporigen Aluminiumschaum handeln. Bei einem keramischen Schaum kann das Trägermaterial beispielsweise β-Siliziumkarbid und/oder Borkarbid und/oder bei einem metallischen Schaum Aluminiumoxid als Material aufweisen. Bei der Herstellung des Trägermaterials kann insbesondere die Porengröße individuell eingestellt werden.

Unter dem Merkmal, dass "eine Querschnittsfläche des mindestens einen Katalysatorelementes quer zu der Längsrichtung im Wesentlichen vollständig den Hohlraum des Katalysatorgehäuses ausfüllt" wird insbesondere verstanden, dass der Außendurchmesser des Katalysatorelementes im Querschnitt nur geringfügig geringer als der Innendurchmesser des hohlen Katalysatorgehäuses ist. Somit weist das Katalysatorelement im Querschnitt einen geringfügig geringeren Durchmesser als der Durchmesser des Hohlraums im Querschnitt auf. Dadurch kann bei dem im Wesentlichen vollständigen Ausfüllen zwischen der Außenoberfläche des Katalysatorelementes und der Innenwand des Katalysatorgehäuses ein geringfügiger Spalt vorliegen. Das Spaltmaß des geringfügigen Spaltes liegt insbesondere in einem Bereich von 1,0 mm bis 3,0 mm, bevorzugt von 1,5 mm bis 2,5 mm. Ebenso kann die Außenoberfläche des Katalysatorelementes bündig, direkt anliegend an die Innenwand des Katalysatorgehäuses ausgebildet sein. Darunter, dass das mindestens eine Katalysatorelement quer zu der Längsrichtung im Wesentlichen vollständig den Hohlraum des Katalysatorgehäuses ausfüllt, wird auch verstanden, dass das Katalysatorelement ein Ausmaß annimmt, bei dem es in Längsrichtung zumindest bei einem Kraftaufwand noch aus dem Katalysatorgehäuse herausgeschoben und somit entfernt werden kann. Somit hängt das Ausmaß der Querschnittsfläche des Katalysatorelementes und das direkte Anliegen des Katalysatorelementes an der Innenwand des Katalysatorgehäuses auch von der Flexibilität des Katalysatorelementes ab. Wenn dies aufgrund der porösen Trägermaterialstruktur leicht flexibel ist, kann dieses bei einer Querschnittsfläche, welche vollständig den Querschnitt des Hohlraums des Katalysatorgehäuses einnimmt, aufgrund der Flexibilität aus dem Katalysatorgehäuse herausausgedrückt werden. Wenn das Trägermaterial ein festes, nicht flexibles Material ist, ist gegebenenfalls ein kleiner Spalt zwischen der Querschnittsfläche des Katalysatorelementes und der Innenwand des Katalysatorgehäuses vorzusehen. Ein solcher Spalt kann insbesondere am Zulauf in das Katalysatorgehäuse beispielsweise mittels eines Dichtungselementes abgedichtet sein, sodass Wasser nicht außen um das Katalysatorelement herumströmen kann. Ebenso kann die zuführende Rohrleitung und ein anschließender Flansch so ausgebildet sein, dass das zugeführte zu behandelnde Wasser direkt auf die Stirnseite des Katalysatorelementes auftrifft und der geringfügige Spalt außen von dem Flansch belegt und/oder abgedichtet ist. Bevorzugt hat der geringfügige Spalt ein so geringes Spaltmaß, dass organische Schadstoffe in dem Wasser im Spalt ebenfalls photokatalytisch mittels des Katalysatormaterials an der Außenoberfläche des Katalysatorelementes oxidiert werden.

Eine "UV-Strahlungsquelle" ist insbesondere eine Energiequelle, welche UV-Strahlung abgibt. Bei einer UV-Strahlungsquelle kann es sich beispielsweise um eine Quecksilberdampflampe (auch UV-Röhre genannt), eine Leuchtdiode (LED), eine Leuchtröhre (auch Kaltkathoden-Fluoreszenzlampe) oder einen Diodenlaser handeln. Die UV-Strahlungsquelle sendet insbesondere UV-A-Strahlung in einem Wellenlängenbereich von 315 nm bis 380 nm aus. Selbstverständlich kann die UV-Strahlungsquelle jedoch gleichzeitig oder alternativ UV-B- oder UV-C-Strahlung aussenden. Im Falle von UV-LEDs können diese beispielsweise eine gleiche oder unterschiedliche Wellenlänge von 365 nm, 385 nm, 395 nm, 405 nm und/oder 450 nm aufweisen. Die UV-Strahlungsquelle ist insbesondere in der Umgebungsluft um das Katalysatorgehäuse und gerade nicht im Wasser angeordnet.

In einer weiteren Ausführungsform weist das erste Katalysatorgehäuse ein zweites Katalysatorelement, ein drittes Katalysatorelement, ein viertes Katalysatorelement und/oder weitere Katalysatorelemente auf, wobei die Katalysatorelemente in der Längsrichtung direkt aneinanderliegend angeordnet sind.

Somit kann das Katalysatorgehäuse auch zwei oder mehrere in der Längsrichtung aneinandergereihte Katalysatorelemente aufweisen. Gerade bei einem relativ langen Katalysatorgehäuse muss dadurch nicht ein einzelnes sehr langes Katalysatorelement in den Hohlraum des Katalysatorgehäuses eingeschoben werden, sondern es können kleinere einzelne Katalysatorelemente nacheinander in das Katalysatorgehäuse eingebracht und angeordnet werden. Dazu können beispielsweise mehrere zylinderförmige Katalysatorelemente im Katalysatorgehäuse angeordnet sein, welche in ihrer Längsrichtung in Längsrichtung des Katalysatorgehäuses ausgerichtet sind. Ebenso können mehrere Katalysatorelemente scheibenförmig sein, wobei die Scheibenfläche die Querschnittsfläche des jeweiligen Katalysatorelementes quer zur Längsrichtung des Katalysatorgehäuses einnimmt.

Um in dem Reaktormodul eine größere Katalysatormenge bereitzustellen, kann das mindestens eine Reaktormodul ein zweites Katalysatorgehäuse, ein drittes Katalysatorgehäuse, ein viertes Katalysatorgehäuse und/oder weitere Katalysatorgehäuse jeweils mit mindestens einer UV-Strahlungsquelle aufweisen, wobei die Katalysatorgehäuse fluidtechnisch mittels Verbindungselementen verbindbar sind.

Somit kann durch Erhöhung der Anzahl der Katalysatorgehäuse und somit der Katalysatorelemente ein Reaktormodul flexibel an die Menge des zu behandelnden Wassers, die erforderliche Kontaktzeit und/oder den gewünschten Durchfluss angepasst werden. Durch Reihenschaltung von mehreren Katalysatorgehäusen kann insbesondere die Kontaktzeit verlängert werden, während durch Parallelschaltung der behandelte Volumenstrom erhöht werden kann.

Durch Verbindungselemente, wie Rohrleitungen, Ventile, händisch absperrbare Kugelhähne, T-Stücke und ähnlichem, können die Katalysatorgehäuse sowohl fluidtechnisch für einen Parallelbetrieb als auch einen Reihenbetrieb angeordnet sein, sodass im Betrieb flexibel zwischen einer Reihenschaltung und einer Parallelschaltung gewechselt werden kann. Ebenso können einzelne Katalysatorgehäuse mit den innenliegenden Katalysatorelementen abgesperrt und außer Betrieb gesetzt werden, wobei je nach Anordnung in der Parallel- und/oder Reihenschaltung dieses abgesperrte Katalysatorgehäuse dann umfahren werden kann. Somit können die Katalysatorgehäuse beispielsweise ausgebildet als gerade Rohrteile über Bögen oder T-Stücke miteinander verbunden sein. Zwischen den Bögen oder T-Stücken kann ein Abgang mit einem Absperrventil vorgesehen sein, um eine Entleerung der einzelnen Rohrstränge bei Wartungsarbeiten zu ermöglichen. Somit können die Katalysatorgehäuse mittels Bögen platzsparend, mäanderartig verbunden in einem Reaktormodul angeordnet sein.

Bei einem zweiten Katalysatorgehäuse, einem dritten Katalysatorgehäuse, einem vierten Katalysatorgehäuse und/oder einem weiteren Katalysatorgehäuse handelt es sich vom Aufbau und der Funktion um ein oben definiertes Katalysatorgehäuse. Jedoch können alle Katalysatorgehäuse gleich oder unterschiedlich ausgestaltet sein, beispielsweise können die Katalysatorgehäuse unterschiedliche Durchmesser, Querschnittsformen und/oder Längen aufweisen. Ebenso können die Katalysatorgehäuse unterschiedliche Katalysatorelemente und/oder eine unterschiedliche Anzahl von Katalysatorelementen aufweisen.

In einer weiteren Ausführungsform weist die Wasseraufbereitungsanlage ein zweites Reaktormodul, ein drittes Reaktormodul, ein viertes Reaktormodul und/oder weitere Reaktormodule auf, wobei die Reaktormodule fluidtechnisch mittels Verbindungselementen verbindbar sind.

Somit kann die Wasseraufbereitungsanlage durch Anordnung weiterer Reaktormodule in einfacher Weise für die jeweils vorgesehene Behandlung angepasst werden. Dadurch kann insbesondere der Volumenstrom erhöht oder die Kontaktzeit verlängert werden. Hierbei können weitere Reaktormodule bereits fest in der Wasseraufbereitungsanlage installiert und fluidtechnisch verbunden sein und bedarfsgerecht durch Öffnen von Absperrventilen zugeschaltet werden oder weitere Reaktormodule werden zu bereits in der Anlage vorhandenen Reaktormodulen nachgerüstet. Da jedes Reaktormodul an sich als funktionsfähiger photokatalytischer Reaktor mit allen notwendigen Bestandteilen ausgebildet ist, ist neben der Stromversorgung lediglich eine fluidtechnische Zuschaltung von zusätzlichen Reaktormodulen oder deren einfache zusätzliche Installation in der Wasseraufbereitungsanlage erforderlich.

Durch die Absperrbarkeit und Außerbetriebnehmbarkeit der einzelnen Reaktormodule kann durch Öffnen einer alternativen Rohrstrecke ein Reaktormodul umfahren werden und das zu behandelnde Wasser direkt in das nachgeschaltete Reaktormodul strömen, wodurch der Betrieb weiter gewährleistet ist. Dazu wird am Bedienpanel des zugehörigen Schaltschranks die jeweilige UV-Strahlungsquelle des außer Betrieb genommenen Reaktormoduls und/oder lediglich des betroffenen Katalysatorgehäuses abgeschaltet. Dadurch erkennt die Steuerung, dass der Wasseraufbereitungsanlage weniger Katalysatorstrecke zur Verfügung steht und somit die Reinigungsleistung dadurch bedingt geringer ausfällt. Daraufhin kann automatisch die Reinigungszeit von der Steuer- und/oder Regeleinrichtung (SPS) verlängert werden. Somit kann die Wasseraufbereitungsanlage auch bei Wartungs- und Reinigungsarbeiten weiter betrieben werden.

Bei einem zweiten Reaktormodul, einem dritten Reaktormodul, einem vierten Reaktormodul und/oder weiteren Reaktormodulen handelt es sich im Aufbau und der Funktion um ein oben beschriebenes Reaktormodul. Jedoch können die Reaktormodule auch unterschiedlich ausgebildete Katalysatorgehäuse, Katalysatorelemente und/oder unterschiedliche UV-Strahlungsquellen aufweisen.

Um eine optimale Skalierbarkeit und optimale modulare Anordnung bereitzustellen, sind jeweils die Katalysatorgehäuse und/oder jeweils die Reaktormodule parallel und/oder in Reihe fluidtechnisch verbunden.

In einer weiteren Ausführungsform der Wasseraufbereitungsanlage weist das mindestens eine Katalysatorelement oder weisen die Katalysatorelemente jeweils eine Länge in der Längsrichtung in einem Bereich von 0,20 m bis 2,00 m, insbesondere von 0,50 m bis 1,50 m, bevorzugt von 0,75 m bis 1,25 m, auf.

Dadurch kann das jeweilige Katalysatorelement eine Länge aufweisen, bei welcher dieses von einer Person oder von zwei Personen in das entsprechend lange Katalysatorgehäuse eingeschoben und auch wieder entnommen werden kann. Bevorzugt sind lediglich ein einstückiges, langes Katalysatorelement oder nur wenige Katalysatorelemente, wie beispielsweise ≤ 50 Katalysatorelemente, insbesondere ≤ 25 Katalysatorelemente, bevorzugt ≤ 10 Katalysatorelemente, hintereinander in Längsrichtung in das Katalysatorgehäuse eingebracht und angeordnet.

Um eine gut anströmbare Querschnittsfläche, eine gleichmäßige Verteilung des zugeführten Wassers über die Querschnittsfläche des Katalysatorelementes und eine optimale Bestrahlungstiefe bereitzustellen, weist das mindestens eine Katalysatorelement oder die Katalysatorelemente einen Außendurchmesser von 10,0 mm bis 80,0 mm, insbesondere von 20,0 mm bis 60,0 mm, bevorzugt von 30,0 mm bis 50,0 mm, auf.

Die vorstehend genannten Bereich für Längen und/oder Außendurchmesser der Katalysatorelement sind insbesondere für eine mobile Ausführung der Wasseraufbereitungsanlage. In großtechnischen Anwendungen, beispielsweise als vierte Reinigungsstufe einer Kläranlage, können die Längen und/oder die Außendurchmesser der Katalysatorelemente selbstverständlich auch größer als die oben genannten Werte sein.

In einer weiteren Ausführungsform weist das poröse Trägermaterial eine metallische und/oder keramische Struktur, insbesondere einen Siliziumkarbid-Schaum, auf und/oder das Katalysatormaterial weist auf, an und/oder in dem porösen Trägermaterial immobilisiertes Titandioxid auf.

Durch die offenporige Struktur, insbesondere eine schaumartige oder gitterartige, offenporige Struktur, wird eine optimale Durchströmung des Katalysatorelementes und des Trägermaterials gewährleistet. Aufgrund der strukturellen Eigenschaften handelt es sich beispielsweise bei dem Trägermaterial um einen β-Siliziumkarbid-Schaum, welcher mit dem immobilisierten Katalysator als zylindrischer Stab bereitgestellt werden kann. Zudem weist das schaumartige oder andersartig ausgebildete Material ein geeignetes Brechungsverhalten für eine ausreichende Belichtung des immobilisierten Katalysatormaterials und/oder Titandioxides mit den einfallenden UV-Strahlen auf. Somit wird die gesamte reaktive Oberfläche des schaumartigen Katalysatorelementes ausgenutzt, wobei aufgrund der Brechung und/oder Reflexion auch strukturell bedingte Hinterschnitte photokatalytisch wirksam sind. Der Siliziumkarbid-Schaum weist insbesondere eine offene Porosität von 91 % bis 94 % auf.

Um ein Verschieben oder sogar einen Austritt des Katalysatorelementes oder der Katalysatorelemente in der Durchströmungsrichtung aus dem Katalysatorgehäuse zu vermeiden, kann an einem Auslass des letzten Katalysatorgehäuses eines Reaktormoduls, des jeweiligen Katalysatorgehäuses und/oder der Katalysatorgehäuse eine mechanische Rückhalteeinheit zum Rückhalten des letzten Katalysatorelementes, des jeweiligen Katalysatorelementes und/oder der Katalysatorelemente angeordnet sein.

Bei einer "Rückhalteeinheit" handelt es sich insbesondere um jegliches Bauteil, welches einen Austritt eines Katalysatorelementes am Auslass des Katalysatorgehäuses verhindert. Bei einer Rückhalteeinheit kann es sich beispielsweise um ein Kreuz, ein Gitter, ein Lochblech und/oder ähnliches handeln. Bevorzugt verhindert die Rückhalteeinheit zwar einen Austritt des Katalysatorelementes aus dem Katalysatorgehäuse, schränkt jedoch den Strömungsquerschnitt nur geringfügig ein, um nicht einen zusätzlichen Druckverlust zu verursachen.

In einer weiteren Ausführungsform ist die UV-Strahlungsquelle oder sind zwei oder mehrere UV-Strahlungsquellen außen am und/oder um das jeweilige Katalysatorgehäuse und/oder zwischen zwei Katalysatorgehäusen angeordnet.

Dadurch tritt UV-Strahlung rundumlaufend, entlang des Außendurchmessers und/oder der Längsrichtung des jeweiligen Katalysatorgehäuses durch die UV-durchlässige Gehäusewand durch und ermöglicht somit eine vollständige Bestrahlung des innenliegenden jeweiligen Katalysatorelementes. Zusätzlich und/oder ergänzend zu zwei oder mehreren UV-Strahlungsquellen kann außen am und/oder um das jeweilige Katalysatorgehäuse auch ein Reflektor angeordnet sein. Die UV-Strahlungsquellen werden jeweils in einem optimalen Abstand zu der Oberfläche des Katalysatorgehäuses und somit des Katalysatorelementes und/oder in einem optimalen Abstand zueinander angeordnet, um eine vollständige Bestrahlung der Außenoberfläche des Katalysatorgehäuses und somit des Katalysatorelementes zu gewährleisten. Die Anordnung und die Anzahl der UV-Strahlungsquellen hängt hierbei jeweils auch vom Abstrahlungswinkel der jeweiligen UV-Strahlungsquelle ab.

Um eine kleinbauende, flexible einsetzbare und anordenbare Strahlungsquelle bereitzustellen, weist die UV-Strahlungsquelle und/oder weisen die UV-Strahlungsquellen eine Leuchtdiode oder mehrere Leuchtdioden auf.

Beispielsweise wird bei einem 1 m langen Katalysatorelement die Anzahl und die Anordnung von LEDs als UV-Strahlungsquelle mit UV-A-Strahlung so gewählt, dass eine optische Leistung im Bereich von 100,0 W bis 200,0 W, insbesondere von 120,0 W bis 180,0 W, bevorzugt von 140,0 W bis 160,0 W, für die Bestrahlung bereitgestellt wird. Bei UV-B-Strahlung und UV-C Strahlung kann die optische Leistung der UV-Strahlungsquelle variieren.

Für eine optimale Anordnung können die UV-LEDs beispielsweise auf einer Platine in einer Reihe nebeneinander angeordnet werden, sodass eine Art Leuchtstreifen entsteht. Auch können die UV-LEDs auf einem flexiblen und/oder spiralförmig wickelbaren Träger angeordnet und rundumlaufend um das jeweilige Katalysatorgehäuse beabstandet gewickelt angeordnet sein.

Alternative oder ergänzend können selbstverständlich auch UV-Röhren und/oder -lampen aneinandergereiht und/oder parallel gesetzt um das jeweilige Katalysatorgehäuse angeordnet sein.

In einer weiteren Ausführungsform der Wasseraufbereitungsanlage ist die Leuchtdiode oder sind mehrere Leuchtdioden auf einem Kühlkörper angeordnet.

Damit können die LEDs und die zugehörigen Platinen direkt auf einem Kühlkörper montiert sein. Dadurch kann eine hohe Anzahl von LEDs auf dem Kühlkörper angeordnet sein, ohne dass es zu einer starken Wärmeentwicklung kommt. Damit wird eine langanhaltende und unterbrechungsfreie Bestrahlung und Betrieb gewährleistet, ohne dass die UV-Strahlungsquelle, wie in der herkömmlichen Wasseraufbereitung üblich, direkt durch das zu behandelnde Wasser gekühlt wird. Folglich wird eine Belagbildung auf den LEDs und/oder einer anderen UV-Strahlungsquelle angeordnet auf dem Kühlkörper verhindert.

Durch die Kühlung der LEDs mittels der Kühlkörper, kann der komplette photokatalytische Reaktor mit seiner unterschiedlichen Anzahl an Reaktormodulen mittels eines Gehäuses eingehaust sein, wodurch der Bediener vor Verbrennungen und dessen Auge vor Schäden der künstlich erzeugten UV-Strahlung geschützt ist. Somit wird der Großteil der UV-Strahlung innerhalb der Einhausung absorbiert und eine Schädigung der Bedienpersonen weitgehend ausgeschlossen. Um die von den LEDs erzeugte Wärme aus der Einhausung abzuführen, kann zusätzlich eine Be- und/oder Entlüftungsanlage angeordnet sein. Eine solche Abluftanlage weist insbesondere eine Zuluftleitung und eine Abluftleitung auf, wobei die Zuluftleitung von außerhalb Luft in die Einhausung des photokatalytischen Reaktors einbringt. Die Zuluftleitung kann sich noch außerhalb der Einhausung in mehrere Stränge aufteilen, um die Zuluft optimal in der Einhausung zu verteilen. Auf der Abluftseite kann mittels eines Gebläses wiederum aus mehreren Strängen, welche zu einem Abluftrohr zusammengeführt werden können, aus der Einhausung die warme Abluft abgesaugt und nach außen in die Umgebung abgeleitet werden. Dadurch wird eine optimale Kühlung des eingehausten photokatalytischen Reaktors mit seinen integrierten Reaktormodulen inklusive der UV-Lichtquelle gewährleistet, wodurch die Lebensdauer und der Wirkungsgrad der UV-Lichtquelle und/oder der LEDs erhöht werden kann.

Um die Wasseraufbereitung für die jeweilige Betriebsweise und die Behandlungsanforderungen auszurüsten, kann die Wasseraufbereitungsanlage einen Vorlagebehälter, einen Vorabscheider, eine Steuerungs- und/oder Regelungseinrichtung, mindestens einen Messsensor zum Überwachen der organischen Schadstoffe und/oder zum Messen chemischer und/oder physikalischer Wasserparameter, einen Drucksensor, einen Füllstandssensor, ein Gehäuse um das Reaktormodul oder die Reaktormodule und/oder eine Be- und/oder Entlüftungseinrichtung aufweisen, sodass die Wasseraufbereitungsanlage in einem Durchlaufbetrieb oder Kreislaufbetrieb betreibbar ist.

Somit kann der Vorlagebehälter beispielsweise batchweise gefüllt und das in dem Vorlagebehälter vorliegende Wasser einmalig im Durchlaufbetrieb oder mehrmalig im Kreislaufbetrieb mittels der Reaktormodule gereinigt und organische Schadstoffe durch photokatalytische Oxidation zerstört werden. Ebenso kann die Anlage auch bei externem Vorliegen von kontinuierlich aufzubereitendem Wasser, kontinuierlich im Durchflussbetrieb betrieben werden und das aufgereinigte Wasser kann direkt über den Ablauf wieder die Wasseraufbereitungsanlage verlassen.

Bei einem optionalen Messsensor zur Überwachung der organischen Schadstoffe kann es sich beispielsweise um eine Online-Sonde im Ablauf oder Bypass oder um ein Durchflussphotometer handeln, mit welchem der spektrale Absorptionskoeffizient SAK 254 nm bestimmt wird. Der bestimmte SAK-Wert kann als Überwachungswert für die Belastung des Wassers mit organischen Schadstoffen verwendet werden, da viele organische Stoffe mit einer Kohlenstoffdoppelbindung Licht im Wellenlängenbereich von 254 nm absorbieren. Die SAK-Sonde kann im Vorlagebehälter, der Druckleitung zu den Reaktormodulen und/oder in der Rückführleitung messen. Auch kann die SAK-Sonde über Schlauchleitungen wechselseitig mit dem Zulaufwasser und dem Ablaufwasser aus den Reaktormodulen beschickt werden. Bei einer reproduzierbaren Abnahme des SAK 254-Wertes kann dieser direkt zur Steuerung und/oder Regelung der Anlage verwendet werden. Zusätzlich kann es sich bei einem Messsensor auch um einen Trübungssensor handeln. Ebenso kann die Wasseraufbereitungsanlage ohne Messsensor und/oder SAK-Sonde betrieben werden, wobei abhängig von der vorliegenden Wasserbeschaffenheit eine Behandlungszeit vorgegeben und zeitgesteuert das Wasser bis zum Erreichen dieser Behandlungszeit im Kreislauf behandelt wird.

Über einen Drucksensor oder mehrere Drucksensoren kann sowohl ein Druckverlust über das Vorfilter zum Abscheiden von Partikeln und/oder Grobstoffen sowie ein Druckverlust über die Reaktormodule und somit die Katalysatorelemente ermittelt werden. Somit kann eine notwendige Reinigung und/oder ein Austausch des Filtermaterials des Vorfilters und/oder von einzelnen Katalysatorelementen frühzeitig erkannt werden. Selbstverständlich können auch weitere Parameter, wie pH, Temperatur und ähnliches, mittels Messsensoren gemessen werden. Über Durchflussmessgeräte kann zudem je nach Wasserqualität eine Abhängigkeit der photokatalytischen Abbauleistung von der Fließgeschwindigkeit in der Anlage bestimmt und somit der optimale Betriebspunkt bei maximaler Reinigungsleistung der Reaktormodule ermittelt werden.

In einem weiteren Aspekt wird die Aufgabe gelöst durch eine Verwendung einer zuvor beschriebenen Wasseraufbereitungsanlage zum Zerstören von organischen Schadstoffen im Wasser, insbesondere in Spülwasser und/oder Waschwasser von Spritzenwagen zum Ausbringen von Pflanzenschutzmitteln.

Folglich kann durch Verwendung der Wasseraufbereitungsanlage der Anwender gezielt, speziell mit organischen Schadstoffen belastete Wässer, wie insbesondere Spülwässer und/oder Waschwasser von Spritzenwagen, durch Zerstörung von organischen Schadstoffen aufbereiten. Es ist besonders vorteilhaft, dass die Wasseraufbereitungsanlage direkt am Entstehungsort des mit organischen Schadstoffen belasteten Wassers einsetzbar und dazu optimal modular zusammenstellbar und ausrüstbar ist. Dadurch können gezielt Pflanzenschutzmittel und weitere organische Schadstoffe aus Spülwässern und/oder Waschwasser von Spritzenwagen zerstört und die notwendige Reinigung des Spritzenwagens zwischen Chargenwechsel von verschiedenen Pflanzenschutzmitteln ermöglicht werden, ohne dass diese über unerwünschte Eintragspfade in die Umwelt abgelassen oder abgegeben werden. Ebenso kann die Verwendung für jegliche mit organischen Schadstoffen belastete Wässer, wie beispielsweise mit Arzneimittelrückständen belastetes Wasser und/oder für die weitere Behandlung des Ablauf einer zweiten oder dritten Reinigungsstufe einer Kläranlage, erfolgen. Ebenso kann die Verwendung für Wässer aus der Chemie- und/oder Pharmaindustrie und Prozessabwässern mit Belastungen an unterschiedlichen organischen Schadstoffen erfolgen.

Im Weiteren wird die Erfindung anhand von Ausführungsbeispielen näher erläutert. Es zeigen
- Figur 1: eine stark schematische Querschnittsdarstellung eines Reaktormoduls mit einem Katalysatorrohr,
- Figur 2: ein stark schematisches Anlagenschema einer Wasseraufbereitungsanlage,
- Figur 3: eine stark schematische Längsschnittdarstellung eines Katalysatorrohres mit einem einstückigen Katalysatorelement,
- Figur 4: eine stark schematische Längsschnittdarstellung eines alternativen Katalysatorrohres mit drei Katalysatorzylinderstücken, und
- Figur 5: eine stark schematische Längsschnittdarstellung einer weiteren Alternative des Katalysatorrohrs mit Katalysatorscheiben.

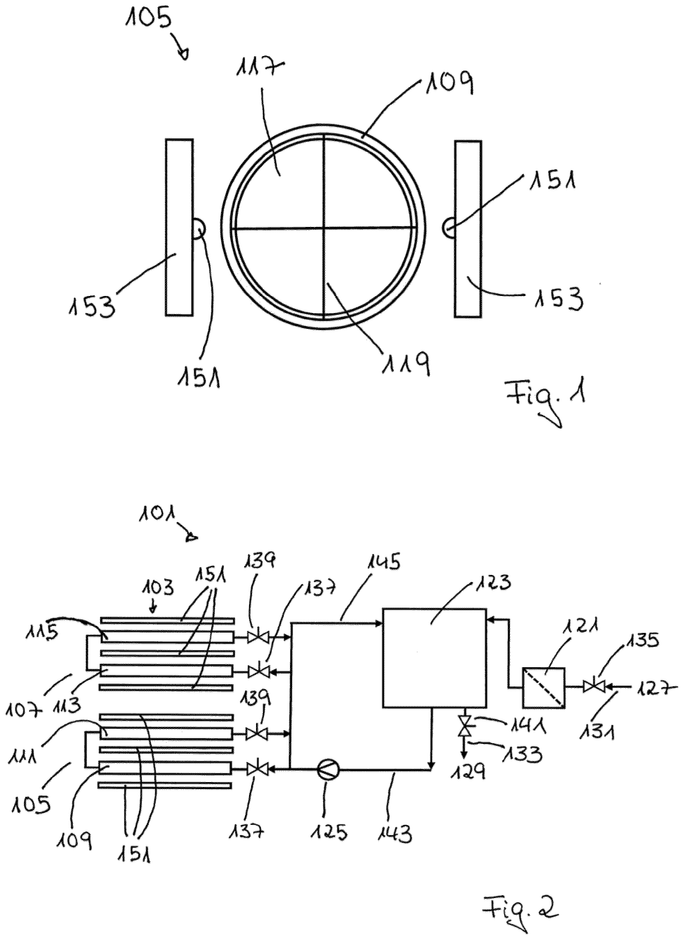

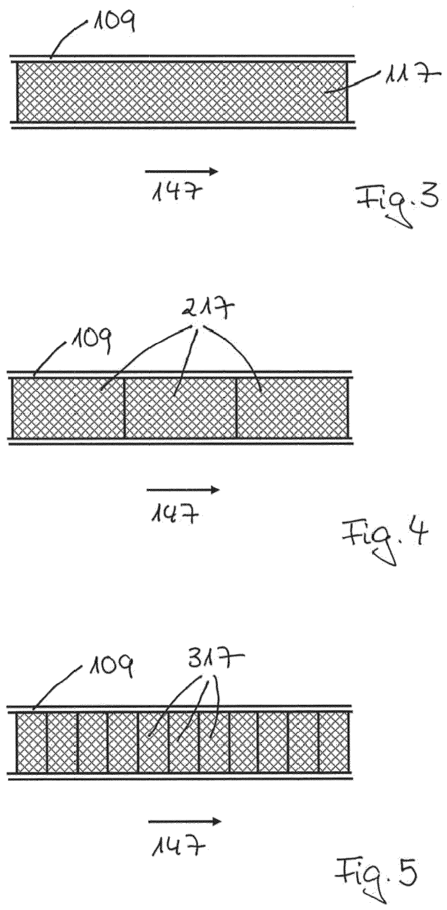

Ein erstes Reaktormodul 105 einer Wasseraufbereitungsanlage 101 weist ein erstes Katalysatorrohr 109 auf. In das erste Katalysatorrohr 109 ist ein einstückiges Katalysatorelement 117 in einer Längsrichtung des ersten Katalysatorrohrs 109 und somit in einer Durchströmungsrichtung 147 des Wassers angeordnet (Figur 3). Das Katalysatorelement 117 ist bündig in einem Hohlraum des ersten Katalysatorrohrs 109 angeordnet (Figur 1 zeigt lediglich aus zeichnerischen Gründen einen geringen Spalt zwischen einem Außendurchmesser des Katalysatorelementes 117 und einer Innenwand des Katalysatorrohrs 109). Das Katalysatorelement weist einen hochporösen β-Siliziumkarbid-Schaum mit einer Porosität von 95 % auf, welcher mit immobilisiertem Titandioxid als Photokatalysator belegt ist.

In einer in Figur 4 gezeigten Alternative weist das erste Katalysatorrohr 109 drei bündig hintereinander in der Durchflussrichtung 147 angeordnete Katalysatorzylinderstücke 217 auf. In einer weiteren in Figur 5 gezeigten Alternative weist das erste Katalysatorrohr 109 elf in der Durchströmungsrichtung 147 hintereinander angeordnete Katalysatorscheiben 317 auf. An seinem Auslassende weist das erste Katalysatorrohr 109 ein Rückhaltegitter 119 zum Rückhalt der Katalysatorelemente 117, 217 oder 317 auf (Figur 1 zeigt die Draufsicht auf den Querschnitt im Bereich des Rückhaltegitters 119 am Auslass des ersten Katalysatorrohr 109).

Außen um das erste Katalysatorrohr 109 sind gleichmäßig verteilt in Längsrichtung des ersten Katalysatorrohrs 109 und somit in Durchströmungsrichtung 147 beabstandete UV-A-LEDs 151 angeordnet, wobei die jeweiligen Reihen von UV-A-LEDs 151 mit ihren zugehörigen Platinen auf einem in Längsrichtung des ersten Katalysatorrohrs 109 ausgerichteten Kühlkörper 153 angeordnet sind.

Das erste Reaktormodul 105 weist neben dem ersten Katalysatorrohr 109 und den UV-A-LEDs 151 angeordnet auf den Kühlkörpern 153 ein zweites Katalysatorrohr 111 auf, welches analog aufgebaut und ebenfalls von UV-A-LEDs 151 angeordnet auf Kühlkörpern 153 von außen umgeben ist. Ein zweites Reaktormodul 107 weist ein drittes Katalysatorrohr 113 und ein viertes Katalysatorrohr 115 auf, welche ebenfalls von UV-A-LEDs 151 auf Kühlkörpern 153 umgeben sind. Die Katalysatorrohre 109, 111, 113 und 115 weisen jeweils UV-durchlässiges Acrylglas auf.

Das erste Reaktormodul 105 und das zweite Reaktormodul 107 bilden einen Röhrenreaktor 103 aus, welcher in der Wasseraufbereitungsanlage 101 innerhalb eines 20-Fuß-Containers installiert ist (Figur 2). Des Weiteren weist die Wasseraufbereitungsanlage 101 einen Zulauf 127 und eine Zulaufleitung 131 mit einem Zulaufventil 135 auf. Die Zulaufleitung 131 führt in ein Filter 121 zur Abscheidung von Partikeln. Das mittels des Filters 121 gefilterte Wasser gelangt anschließend über eine Rohrleitung in den Vorlagebehälter 123. Der Vorlagebehälter 123 ist mit einer Entleerungsleitung 133 mit einem Entleerungsventil 141 verbunden. Des Weiteren ist der Vorlagebehälter 123 mit einer Förderleitung 143 verbunden, in welcher eine Pumpe 125 angeordnet ist. Nach der Pumpe 125 verzweigt sich die Rohrleitung auf das erste Reaktormodul 105 und das zweite Reaktormodul 107, welche parallel zueinander angeordnet sind.

Das parallel verschaltete erste Reaktormodul 105 und das zweite Reaktormodul 107 sind jeweils mittels eines Strangventils 137 im jeweiligen Zulauf und mittels eines Absperrventils 139 in jeweiligen Ablauf absperrbar. In dem ersten Reaktormodul 105 werden das erste Katalysatorrohr 109 mit dem innenliegenden Katalysatorelement 117 und das zweite Katalysatorrohr 111 mit dem innenliegenden Katalysatorelement 117 in Reihe durchflossen. Ebenso werden in dem zweiten Reaktormodul 107 das dritte Katalysatorrohr 113 und das vierte Katalysatorrohr 115 mit dem jeweils innenliegenden Katalysatorelement 117 nacheinander in Reihe durchflossen, wobei das zweite Reaktormodul 107 aufgrund der Rohrleitungsführung ein Wassergemisch aus dem Wasser aus dem Vorlagebehälter 123 und dem Ablauf aus dem zweiten Katalysatorrohr 111 des ersten Reaktormoduls 105 zugeführt wird. Das mittels des ersten Reaktormoduls 105 und des zweiten Reaktormoduls 107 behandelte Wasser ist über eine Rücklaufleitung 145 in den Vorlagebehälter 123 zurückführbar und über die Pumpe 125 im Umlaufbetrieb wieder dem ersten Reaktormodul 105 und dem zweiten Reaktormodul 107 zuführbar.

Mit der Wasseraufbereitungsanlage 101 und dem installierten Röhrenreaktor 103 werden folgende Arbeitsschritte durchgeführt:

Die Wasseraufbereitungsanlage 101 wird zur Zerstörung von organischen Pflanzenschutzmitteln aus Spülwässern von Spritzenwagen im Weinanbau verwendet. Das mit den Pflanzenschutzmitteln kontaminierte Spülwasser wird über eine externe Druckleitung in den Vorlagebehälter 123 durch den Zulauf 127 und die Zulaufleitung 131 bei geöffnetem Zulaufventil 135 zunächst durch den Filter 121 gefördert, in dem grobe Verschmutzungen und Schwebstoffe entfernt werden. Das gefilterte weiterhin kontaminierte Spülwasser wird in den Vorlagebehälter 123 gefördert. Mittels einer nicht in Figur 2 gezeigten Füllstandsmessung wird der Füllstand des Vorlagebehälters 123 überwacht und bei Erreichen eines maximal vorgegebenen Füllstandes wird das Zulaufventil 135 geschlossen. Anschließend wird das jeweilige Strangventil 137 im Zulauf zu dem ersten Reaktormodul 105 und dem zweiten Reaktormodul 107 geöffnet und die Pumpe 125 in Betrieb genommen, sodass kontaminiertes Wasser aus dem Vorlagebehälter 123 mit einer Fließgeschwindigkeit von circa 0,8 l/s über die Förderleitung 143 bei geöffneten Strangventilen 137 in den Zulauf des ersten Katalysatorrohrs 109 und des dritten Katalysatorrohrs 113 gefördert wird. Gleichzeitig zum Schaltzeitpunkt der Pumpe 125 werden die aufgereihten UV-A-LEDs 151 aktiviert, sodass diese UV-A-Strahlung durch die UV-durchlässigen Katalysatorrohre 109, 111, 113 und 115 auf das jeweils innenliegende Katalysatorelement 117 einstrahlen.

Dadurch wird die photokatalytische Reaktion an dem immobilisierten Titandioxidkatalysator des jeweiligen Katalysatorelementes 117 ausgelöst und es entstehen hochreaktive Sauerstoff- und OH-Radikale, welche mit den organischen Pflanzenschutzmitteln in dem Spülwasser reagieren und diese oxidativ abbauen. Nach Durchströmen der jeweils nacheinander geschalteten Katalysatorelemente 117 in dem ersten Katalysatorrohr 109 und dem zweiten Katalysatorrohr 111 des ersten Reaktormoduls 105 und des dritten Katalysatorrohrs 113 und des vierten Katalysatorrohrs 115 des zweiten Reaktormoduls 107 wird das behandelte Spülwasser mit den zumindest teilweise anoxidierten Pflanzenschutzmitteln über die Rücklaufleitung 145 in den Vorlagebehälter 123 zurückgeführt und im Kreislaufbetrieb nachfolgend mittels der Pumpe 125 mehrmals durch das erste Reaktormodul 105 und das zweite Reaktormodul 107 im Kreislauf geführt, bis die Pflanzenschutzmittel vollständig aufoxidiert und somit zerstört sind. Die Aufoxidation der Pflanzenschutzmittel wird messtechnisch mittels einer SAK-Sonde und/oder Einzelstoffanalytik im Labor überwacht. Bei Erreichen einer vorgegebenen Zerstörungsleistung von > 95 % der Pflanzenschutzmittel wird die Pumpe 125 abgestellt und das Entleerungsventil 141 geöffnet, sodass das gereinigte Spülwasser aus dem Vorlagebehälter 123 über die Entleerungsleitung 133 abgegeben wird. Aufgrund der weitestgehenden Zerstörung der Pflanzenschutzmittel kann das abgelassene aufgereinigte Spülwasser direkt als Brauchwasser im landwirtschaftlichen Betrieb oder zum Ansetzen einer neuen Lösung mit Pflanzenschutzmitteln im Spritzwagen verwendet werden.

Somit wird eine kompakt bauende, dezentral einsetzbare, modular anpassbare Wasseraufbereitungsanlage 101 bereitgestellt, bei der aufgrund der vollständigen Durchströmung der Katalysatorelemente 117 in den Katalysatorrohren 109, 111, 113 und 115 eine weitgehende Zerstörung von Pflanzenschutzmitteln dezentral und mobil realisierbar ist.

### Bezugszeichenliste

- 101: Wasseraufbereitungsanlage
- 103: Röhrenreaktor
- 105: erstes Reaktormodul
- 107: zweites Reaktormodul
- 109: erstes Katalysatorrohr
- 111: zweites Katalysatorrohr
- 113: drittes Katalysatorrohr
- 115: viertes Katalysatorrohr
- 117: Katalysatorelement
- 119: Rückhaltgitter
- 121: Filter
- 123: Vorlagebehälter
- 125: Pumpe
- 127: Zulauf
- 129: Ablauf
- 131: Zulaufleitung
- 133: Entleerungsleitung
- 135: Zulaufventil
- 137: Strangventil
- 139: Absperrventil
- 141: Entleerungsventil
- 143: Förderleitung
- 145: Rücklaufleitung
- 147: Durchströmungsrichtung
- 151: UV-A-LED
- 153: Kühlkörper
- 217: Katalysatorzylinderstücke
- 317: Katalysatorscheiben

## Patentansprüche

1. Wasseraufbereitungsanlage (101) zum Zerstören von organischen Schadstoffen im Wasser, wobei die Wasseraufbereitungsanlage (101) einen Zulauf (127) zum Zuführen von mit organischen Schadstoffen belastetem Wasser, einen Ablauf (129) zum Abführen des gereinigten Wassers und mindestens ein Reaktormodul (105, 107) aufweist, und der Wasseraufbereitungsanlage (101) eine Fördereinheit zum Fördern des belastenten und/oder gereinigten Wassers zugeordnet ist oder die Wasseraufbereitungsanlage (101) eine Fördereinheit (125) zum Fördern des belastenten und/oder gereinigten Wassers aufweist, wobei das mindestens eine Reaktormodul (105, 107) ein erstes Katalysatorgehäuse (109, 111, 113, 115) mit einem in einer Längsrichtung durchgehenden Hohlraum und mit einer Durchströmungsrichtung (147) in der Längsrichtung und mindestens eine UV-Strahlungsquelle (151) aufweist, und das erste Katalysatorgehäuse (109, 111, 113, 115) ein UV-durchlässiges Material aufweist, wobei in dem Hohlraum mindestens ein Katalysatorelement (117, 217, 317) mit einem Trägermaterial und einem Katalysatormaterial angeordnet ist und mittels der mindestens einen UV-Strahlungsquelle (151) das mindestens eine Katalysatorelement (117, 217, 317) in dem Katalysatorgehäuse (109, 111, 113, 115) bestrahlbar ist, **dadurch gekennzeichnet, dass** das mindestens eine Katalysatorelement (117, 217, 317) ein poröses, vom Wasser durchströmbares Trägermaterial aufweist und eine Querschnittsfläche des mindestens einen Katalysatorelementes (117, 217, 317) quer zu der Längsrichtung im Wesentlichen vollständig den Hohlraum des Katalysatorgehäuses (109, 111, 113, 115) ausfüllt, sodass bei einem Bestrahlen mit UV-Licht mittels der mindestens einen UV-Strahlungsquelle (151) und bei einem Durchströmen des Katalysatorelementes (117, 217, 317) mit Wasser organische Schadstoffe in dem Wasser photokatalytisch abbaubar sind.

2. Wasseraufbereitungsanlage (101) nach Anspruch 1, **dadurch gekennzeichnet, dass** das erste Katalysatorgehäuse (109, 111, 113, 115) ein zweites Katalysatorelement, ein drittes Katalysatorelement, ein viertes Katalysatorelement und/oder weitere Katalysatorelemente (117, 217, 317) aufweist, wobei die Katalysatorelemente (117, 217, 317) in der Längsrichtung direkt aneinanderliegend angeordnet sind.

3. Wasseraufbereitungsanlage (101) nach Anspruch 1 oder 2, **dadurch gekennzeichnet, dass** das mindestens eine Reaktormodul (105, 107) ein zweites Katalysatorgehäuse, ein drittes Katalysatorgehäuse, ein viertes Katalysatorgehäuse und/oder weitere Katalysatorgehäuse (109, 111, 113, 115) jeweils mit mindestens einer UV-Strahlungsquelle (151) aufweist, wobei die Katalysatorgehäuse (109, 111, 113, 115) fluidtechnisch mittels Verbindungselementen verbindbar sind.

4. Wasseraufbereitungsanlage (101) einem der vorherigen Ansprüche, **dadurch gekennzeichnet, dass** die Wasseraufbereitungsanlage (101) ein zweites Reaktormodul, ein drittes Reaktormodul, ein viertes Reaktormodul und/oder weitere Reaktormodule (105, 107) aufweist, wobei die Reaktormodule (105, 107) fluidtechnisch mittels Verbindungselementen verbindbar sind.

5. Wasseraufbereitungsanlage (101) nach einem der vorherigen Ansprüche, **dadurch gekennzeichnet, dass** jeweils die Katalysatorgehäuse (109, 111, 113, 115) und/oder jeweils die Reaktormodule (105, 107) parallel und/oder in Reihe fluidtechnisch verbunden sind.

6. Wasseraufbereitungsanlage (101) nach einem der vorherigen Ansprüche, **dadurch gekennzeichnet, dass** das mindestens eine Katalysatorelement oder die Katalysatorelemente (117, 217, 317) jeweils eine Länge in der Längsrichtung in einem Bereich von 0,20 m bis 2,00 m, insbesondere von 0,50 m bis 1,50 m, bevorzugt von 0,75 m bis 1,25 m aufweist oder aufweisen.

7. Wasseraufbereitungsanlage (101) nach einem der vorherigen Ansprüche, **dadurch gekennzeichnet, dass** das mindestens eine Katalysatorelement oder die Katalysatorelemente (117, 217, 317) einen Außendurchmesser von 10,0 mm bis 80,0 mm, insbesondere von 20,0 mm bis 60,0 mm, bevorzugt von 30,0 mm bis 50,0 mm, aufweist.

8. Wasseraufbereitungsanlage (101) nach einem der vorherigen Ansprüche, **dadurch gekennzeichnet, dass** das poröse Trägermaterial eine metallische und/oder keramische Struktur, insbesondere einen Siliziumkarbid-Schaum, aufweist und/oder das Katalysatormaterial auf, an und/oder in dem porösen Trägermaterial immobilisiertes Titandioxid aufweist.

9. Wasseraufbereitungsanlage (101) nach einem der vorherigen Ansprüche, **dadurch gekennzeichnet, dass** an einem Auslass des letzten Katalysatorgehäuses eines Reaktormoduls (105, 107), des jeweiligen Katalysatorgehäuses und/oder der Katalysatorgehäuse (109, 111, 113, 115) eine mechanische Rückhalteeinheit (119) zum Rückhalt des letzten Katalysatorelementes, des jeweiligen Katalysatorelementes und/oder der Katalysatorelemente (117, 217, 317) angeordnet ist oder sind.

10. Wasseraufbereitungsanlage (101) nach einem der vorherigen Ansprüche, **dadurch gekennzeichnet, dass** die UV-Strahlungsquelle oder zwei oder mehrere UV-Strahlungsquellen (151) außen am und/oder um das jeweilige Katalysatorgehäuse und/oder zwischen zwei Katalysatorgehäusen (109, 111, 113, 115) angeordnet ist oder sind.

11. Wasseraufbereitungsanlage (101) nach einem der vorherigen Ansprüche, **dadurch gekennzeichnet, dass** die UV-Strahlungsquelle und/oder die UV-Strahlungsquellen eine Leuchtdiode oder mehrere Leuchtdioden (151) aufweist oder aufweisen.

12. Wasseraufbereitungsanlage (101) nach einem der vorherigen Ansprüche, **dadurch gekennzeichnet, dass** die Leuchtdiode oder mehrere Leuchtdioden (151) auf einem Kühlkörper (153) angeordnet ist oder sind.

13. Wasseraufbereitungsanlage (101) nach einem der vorherigen Ansprüche, **dadurch gekennzeichnet, dass** die Wasseraufbereitungsanlage (101) einen Vorlagebehälter (123), einen Vorabscheider (121), eine Steuerungs- und/oder Regelungseinrichtung, mindestens einen Messsensor zum Überwachen der organischen Schadstoffe und/oder zum Messen chemischer und/oder physikalischer Wasserparameter, einen Drucksensor, einen Füllstandsensor, ein Gehäuse um das Reaktormodul oder die Reaktormodule (105, 107) und/oder eine Be- und/oder Entlüftungseinrichtung aufweist, sodass die Wasseraufbereitungsanlage (101) in einem Durchlaufbetrieb oder Kreislaufbetrieb betreibbar ist.

14. Verwendung einer Wasseraufbereitungsanlage (101) nach einem der Ansprüche 1 bis 13 zum Zerstören von organischen Schadstoffen im Wasser, insbesondere in Spülwasser und/oder Waschwasser von Spritzenwagen zum Ausbringen von Pflanzenschutzmitteln.
